# EUROPÄISCHE PATENTSCHRIFT

(11) **EP 1 918 166 B1**
(45) Veröffentlichungstag und Bekanntmachung des Hinweises auf die Patenterteilung: **12.10.2011**
(21) Anmeldenummer: 08101730.3
(22) Anmeldetag: 21.11.2003
(51) Int. Cl.: B60S 1/38, B60S 1/40

(54) **Wischblatt zum lösbaren Verbinden mit einem Wischarm**
Wiper blade having a removable connection with a wiper arm and wiper arm
Balai d'essuie-glace déconnectable d'un bras essuie-glace et bras d'essuie-glace

(30) Priorität: 26.11.2002 DE 10254978; 27.05.2003 DE 10323997
(43) Veröffentlichungstag der Anmeldung: 07.05.2008
(62) Teilanmeldung aus: 03780020.8
(73) Patentinhaber: Valeo Wischersysteme GmbH, 74321 Bietigheim-Bissingen (DE)
(72) Erfinder: Fink, Andreas, 74321 Bietigheim- Bissingen (DE); Scholl, Wolfgang, 74321 Bietigheim-Bissingen (DE); Schremmer, Gerhard, 74321 Bietigheim-Bissingen (DE)
(74) Vertreter: Rosolen-Delarue, Katell

(56) Entgegenhaltungen:
- WO-A1-02/40328
- WO-A1-03/080409
- WO-A1-03/084789
- DE-A1- 19 952 054

## Beschreibung

Die Erfindung betrifft ein Wischblatt zum lösbaren Verbinden mit einem Wischarm gemäß Oberbegriff des Anspruchs 1. Die Erfindung betrifft auch einen Wischarm gemäß Oberbegriff des Anspruchs 14.

Eine derartige Vorrichtung ist beispielsweise Aus der WO 02/40328 A1 ist eine Vorrichtung zum lösbaren Verbinden eines Wischblattes mit einem Wischarm bekannt geworden. Die dort beschriebene Vorrichtung, mit der ein Flachwischblatt an den Kopplungsabschnitt angebunden werden kann, weist eine Reihe von komplexen und aufwändig herstellbaren Bauteilen auf. Zudem ist der Anschließvorgang des Kopplungsabschnitts des Wischarms an das Verbindungselement des Wischblatts relativ komplex und erfordert eine gewisse Geschicklichkeit.

Der vorliegenden Erfindung liegt deshalb die Aufgabe zugrunde, ein Wischblatt zum lösbaren Verbinden mit einem Wischarm sowie einen Wischarm vorzuschlagen, bei denen der Anschließvorgang des Verbindungselements des Wischblattes an den Kopplungsabschnitt des Wischarmes auf einfache Art und Weise durchgeführt werden kann. Außerdem soll gewährleistet werden, dass der Kopplungsabschnitt dauerhaft sicher mit dem Verbindungsabschnitt gefügt ist, wobei ein Lösen des Wischblatts vom Wischarm dennoch einfach durchgeführt werden kann.

Diese Aufgabe wird mit einem Wischblatt gemäß Anspruch 1 gelöst. Die Aufgabe wird auch durch einen Wischarm gemäß Anspruch 14 gelöst.

Das Wischblatt umfasst eine der zu wischenden Scheibe zugewandte Wischleiste, wenigstens ein bandartig langgestrecktes Tragelement, ein mit dem Tragelement verbundenes Reiterelement, und ein an dem Reiterelement pendelbar gelagertes Verbindungselement zum Anschließen an einen einen zungenartigen Einführabschnitt aufweisenden Kopplungsabschnitt des Wischarms, wobei das Verbindungselement des Wischblattes eine Aufnahme für den zungenartigen Einführabschnitt des Kopplungsabschnittes des Wischarms und Sicherungsabschnitte zur gegenseitigen dauerhaften Verbindung mit dem Kopplungsabschnitt des Wischarms über am Kopplungsabschnitt vorgesehene Sicherungsabschnitte aufweist, wobei zur Erreichung einer Vormontageposition, in der die Längsachse des Wischarms und die Längsachse des Verbindungselements einen Winkel α im Bereich von ca. 10° bis 100° einschließen, der Einführabschnitt weitgehend geradlinig in die Aufnahme einführbar ist, und wobei zur Erreichung einer Endmontageposition der Wischarm und der Verbindungsabschnitt um den Kontaktbereich Einführabschnitt/Aufnahme aufeinander zu verschwenkbar sind, bis die Sicherungsabschnitte eine gegenseitige dauerhafte Verbindung ermöglichen.

Der Wischarm mit den Merkmalen des Oberbegriffs des Anspruchs 14 umfasst eine Kopplungsabschnitt, mit welchem ein Wischblatt lösbar verbindbar ist, wobei der Kopplungsabschnitt einen zungenartigen Einführabschnitt und Sicherungsabschnitte zur gegenseitigen dauerhaften Verbindung mit dem Verbindungselement des Wischblattes über die Sicherungsabschnitte an dem Verbindungselement des Wischblattes aufweist, wobei zur Erreichung einer Vormontageposition, in der die Längsachse des Wischarms und die Längsachse des Verbindungselements einen Winkel α im Bereich von ca. 10° bis 100° einschließen, der Einführabschnitt weitgehend geradlinig in die Aufnahme einführbar ist, und wobei zur Erreichung einer Endmontageposition der Wischarm und der Verbindungsabschnitt um den Kontaktbereich Einführabschnitt/Aufnahme aufeinander zu verschwenkbar sind, bis die Sicherungsabschnitte eine gegenseitige dauerhafte Verbindung ermöglichen.

Die Erfindung hat den Vorteil, dass zur Anbindung des Wischblatts an den Wischarm lediglich zwei einfach nachvollziehbare Schritte erforderlich sind, nämlich zum einen ein geradliniges Einführen des Einführabschnitts in die am Verbindungselement vorgesehene Aufnahme und ein Aufeinander-zu-Verschwenken des Kopplungsabschnitts, beziehungsweise des Wischarms, und des Verbindungselements. Zudem hat eine derartige Vorrichtung den Vorteil, dass sie sehr flach und sehr schlank baut. Zum einen werden hierdurch Windgeräusche minimiert. Zum anderen wird die Sicht des Fahrzeuglenkers durch das Wischblatt und den Wischarm nur geringfügig beeinträchtigt. Ferner findet die Krafteinleitung vorzugsweise über der Längsachse des Wischblatts, weitgehend lotrecht zur wischenden Scheibe statt, wodurch das Auftreten von Kippmomenten unterbunden wird.

Vorzugsweise liegt die Einführrichtung zur Erreichung der Vormontageposition in der Schwenkebene zur Erreichung der Endmontageposition. Dies hat den Vorteil, dass beide Bewegungen innerhalb einer Ebene liegen, wodurch der Montagevorgang vereinfacht wird.

Eine Ausführungsform der Erfindung zeichnet sich dadurch aus, dass der Kopplungsabschnitt im Querschnitt U-förmig ausgebildet ist und einen Rücken und zwei Schenkel umfasst, wobei der Einführabschnitt hakenartig ausgebildet und am Rücken des Kopplungsabschnitts freistehend angeordnet ist.

Der im Querschnitt U-förmig ausgebildete Kopplungsabschnitt übergreift in der Endmontageposition vorteilhafterweise das Verbindungselement wenigstens abschnittsweise. Hierdurch können auf das Verbindungselement wirkende Querkräfte von den Schenkeln des Kopplungsabschnitts aufgenommen werden.

Der Einführabschnitt ist vorteilhafterweise derart ausgebildet, dass er am freien Ende, in Richtung der Verlängerung des Wischarms und in Seitenrichtung in Richtung der zu wischenden Scheibe derart bogenartig ausgebildet ist, dass er den Rücken nicht überragt. Dies hat den Vorteil, dass der Einführabschnitt in der Endmontageposition nicht störend über den Rücken des Kopplungsabschnitts ragt. Bei entsprechend ausgebildetem Verbindungselement ist der Einführabschnitt in der Endmontageposition nicht sichtbar.

Dabei ist vorteilhaft, wenn der mit dem Einführabschnitt zusammenwirkende, an die Einführöffnung angrenzende, Bereich des Verbindungselements komplementär zum Einführabschnitt ausgebildet ist. Hierdurch kann in der Endmontageposition gewährleistet werden, dass der Einführabschnitt sicher am komplementär ausgebildeten Bereich des Verbindungselements anliegt.

Eine weitere Ausführungsform der Erfindung ergibt sich dann, wenn der mit dem Einführabschnitt zusammenwirkende Bereich des Verbindungselements und des Einführabschnitts im Längsschnitt bogenartig, und insbesondere kreissegmentartig, ausgebildet sind. Beim Aufeinander-Zu-Schwenken des Kopplungsabschnitts und des Verbindungselements in die Endmontageposition wird hierbei gewährleistet, dass der Einführabschnitt während der Schwenkbewegung großflächig an dem mit dem Einführabschnitt zusammenwirkenden Bereich des Verbindungselements anliegt. Hierdurch wird eine sichere Führung beim Montieren der Vorrichtung von der Vormontageposition in die Endmontageposition gewährleistet. Aufgrund der großflächigen Anlage werden Spannungsspitzen vermieden.

Eine weitere Ausführungsform ergibt sich dann, wenn das Verbindungselement im Querschnitt U-förmig ausgebildet ist und einen Rücken und zwei Schenkel umfasst. Aufgrund der U-förmigen Ausbildung des Verbindungselements kann erreicht werden, dass ein der zu wischenden Scheibe abgewandter Spoilerabschnitt der Wischleiste zwischen den beiden Schenkeln des Verbindungselements sich in Längsrichtung des Wischblatts erstrecken kann. Ferner kann das Verbindungselement an den Schenkeln vorteilhafterweise mit dem Reiter gekoppelt sein.

Vorteilhafterweise ist die Einführöffnung als Aussparung am Rücken ausgebildet. Dies hat den Vorteil, dass die Einführöffnung in der Draufsicht auf das Wischblatt deutlich zu sehen ist, wodurch das Einführen des Einführabschnitts in die Einführöffnung vereinfacht wird.

Erfindungsgemäß ist ferner denkbar, dass in der Endmontageposition der Kopplungsabschnitt das Verbindungselement wenigstens abschnittweise abdeckt. In am Wischarm montierten Zustand liegen dann vorzugsweise die Innenseiten der Schenkel des U-förmig ausgebildeten Kopplungsabschnitts an den Außenseiten der Schenkel des U-förmig ausgebildeten Verbindungselements an. Die Außenseite des Rückens des Verbindungselements liegt vorzugsweise an der Innenseite des Rückens des Kopplungsabschnitts an.

Eine weitere, vorteilhafte Ausführungsform der Erfindung ergibt sich dann, wenn die Sicherungsabschnitte als Rastabschnitte ausgebildet sind. Beim Aufeinander-Zu-Schwenken des Kopplungsabschnitts und des Verbindungselements verrasten die Rastabschnitte vorteilhafterweise in der Endmontageposition miteinander.

Dabei kann vorgesehen sein, dass das Verbindungselement auf seiner in Längsrichtung der Einführöffnung abgewandten Seite an den Schenkeln jeweils eine sich in Längsrichtung erstreckende, in Querrichtung elastisch nachgiebige, Rastzunge aufweist, die mit an den Schenkeln des Kopplungsabschnitts vorgesehenen Rastkanten zusammenwirken.

Um eine sichere Verrastung zu gewährleisten, kann vorteilhafterweise vorgesehen sein, dass die Rastkanten der Rastzungen und die Rastkanten der Schenkel mit der Längsachse des Wischblatts in der Endmontageposition einen spitzen Winkel, insbesondere einen Winkel im Bereich von 30° bis 80°, einschließen.

Zum Lösen der Rastverbindung, und damit zum Lösen des Wischblatts vom Wischarm, kann bei einer weiteren Ausführungsform der Erfindung vorgesehen sein, dass an den freien Enden der Rastzungen Betätigungsabschnitte vorgesehen sind. Die Betätigungsabschnitte sind dabei so ausgebildet, dass ein aufeinander zu gerichtetes Zusammendrücken der Rastzungen möglich ist, wodurch die Rastkanten der Rastzungen aus dem Eingriff mit den Rastkanten an den Schenkeln des Kopplungsabschnitts gelangen können.

Um eine leichtere Verrastung zu ermöglichen, ist vorteilhafterweise vorgesehen, dass die dem Rücken des Kopplungsabschnitts zugewandten Seiten der Rastzungen, die beim Verschwenken in die Endmontageposition auf die Schenkel des Kopplungsabschnitts treffen, angeschrägt sind.

Ebenfalls zu einer leichteren Verrastung trägt bei, wenn die der Scheibe zugewandten Seiten der Schenkel des Kopplungsabschnitts, auf die die ihnen zugewandten Seiten der Rastabschnitte beim Verschwenken in die Endmontageposition treffen, angeschrägt sind. Kurz vor Erreichen der Endmontageposition wirken folglich die angeschrägten Seiten der Rastzungen mit den angeschrägten Seiten der Schenkel des Kopplungsabschnitts derart zusammen, dass die Rastzungen in einander zugewandten Richtungen ausgelenkt werden. In der Endmontageposition hinterschnappen die Rastzungen in einander abgewandten Richtungen die Rastkanten des Kopplungsabschnitts.

Um eine verkehrte Anordnung eines Wischblatts an einem Wischarm zu verhindern kann der Kopplungsabschnitt eine entsprechende Codierung vorsehen. Eine falsche Montage des Wischblatts, beispielsweise am falschen Wischarm, wird hierdurch unterbunden. Eine Codierung kann beispielsweise durch eine entsprechende Anfasung am Kopplungsabschnitt und durch einen entsprechenden, mit der Anfasung zusammenwirkenden, Steg am Verbindungselement realisiert werden.

Eine weitere vorteilhafte Ausführungsform der Erfindung ergibt sich dann, wenn die Schenkel des Verbindungselements als doppelwandige, in Querrichtung leicht elastisch nachgiebige, Schenkel ausgebildet sind. Derartige doppelwandige Schenkel weisen ein besseres Reibverhalten gegenüber dem Reiterelement, gegen das sie verschwenkbar angeordnet sind, auf.

Vorteilhafterweise weist das Verbindungselement zwischen den Schenkeln einen Gelenkbolzen auf, der zur pendelbaren Anordnung des Verbindungselements in einer Lagerung am Reiterelement gelagert ist.

Eine andere Ausführungsform der Erfindung sieht vor, dass das Reiterelement einen mit seinen Enden von dem Reiterelement abragenden Lagerbolzen bzw. alternativ dazu zwei Gelenkzapfen aufweist, auf denen das Verbindungselement mit korrespondierenden und fluchtend angeordneten, in seinen Schenkeln befindlichen Lagerbohrungen verschwenkbar gelagert ist. In diesem Fall ist der Lagerbolzen bzw. sind die Lagerzapfen drehfest mit dem Reiterelement verbunden, und das Verbindungselement ist drehbar bzw. verschwenkbar an dem Reiterelement gelagert. Bei einem Wischblattwechsel wird also die gesamte Lagervorrichtung mit ausgetauscht.

Die in den Schenkeln des Verbindungselementes vorgesehenen Lagerbohrungen sind gemäß einer Weiterbildung der Erfindung jeweils über einen radial zu der Lagerbohrung verlaufenden Schlitz zum Rand hin geöffnet. Diese kann vorteilhaft für eine Vereinfachung der Montage der Einzelteile ausgenutzt werden.

Wenn jeweils der Schlitz entsprechend einer weiteren Ausführungsform von der Lagerbohrung ausgehend zu dem Rand des Schenkels verläuft, welcher dem Rücken des Verbindungselements gegenüber liegt, ist die Gefahr des unerwünschten Herausgleitens des Lagerbolzens bzw. Lagerzapfens aus der Lagerbohrung gering.

Eine weitere vorteilhafte Ausführungsform sieht vor, dass sich jeweils der Schlitz ausgehend von der Lagerbohrung zum Rand des Schenkels hin erweitert, wobei die engste Stelle des Schlitzes kleiner ist als der Durchmesser des Lagerbolzens bzw. der alternativen Lagerzapfen. Diese Ausführung bietet eine Vereinfachung der Montage bzw. Demontage. Durch den Schlitz kann der Lagerbolzen bzw. Lagerzapfen einfach unter Überwindung der Engstelle radial in der Art einer Rastverbindung eingepresst werden. Ebenso kann der Lagerbolzen bzw. Lagerzapfen in umgekehrter Richtung ebenfalls unter Überwindung der Engstelle entfernt werden. Hierzu kann es erforderlich sein, dass das Verbindungselement aus einem geeigneten Kunststoffmaterial besteht, welches ein Überwinden der Engstelle des Schlitzes durch den Lagerbolzen bzw. Lagerzapfen zulässt. Das Reiterelement und oder der Lagerbolzen bzw. die Lagerzapfen können aus Metall oder ebenfalls aus einem geeigneten Kunststoffmaterial bestehen.

Eine weitere, vorteilhafte Ausführungsform der Erfindung sieht vor, dass die Schenkel des Verbindungselements auf der der Scheibe zugewandten Seite nasenartige Erhebungen aufweisen. Diese Erhebungen dienen zur Abstützung an entweder dem Wischgummi oder dem Trageelement, wodurch ein erleichtertes Montieren beziehungsweise Demontieren des Wischblatts ermöglicht wird.

Der Kopplungsabschnitt und das Verbindungselement sind vorzugsweise so ausgebildet, dass sie in der Endmontageposition eine weitgehend geschlossene und weitgehend glatte Oberfläche aufweisen. Dazu können die Abschnitte des Verbindungselements, die von dem Kopplungsabschnitt überdeckt werden, um die Wandstärke des Kopplungsabschnitts tiefer liegen als die Abschnitte des Verbindungselements, die in der Endmontageposition sichtbar sind.

Um das aerodynamische Verhalten der Kombination Wischarm-Wischblatt, insbesondere bei höheren Fahrgeschwindigkeiten bzw. Luftanströmgeschwindigkeiten, zu verbessern und dabei insbesondere dem bekannten Effekt des Abhebens des mit dem Wischarm verbundenen Wischblattes von der zu reinigenden Scheibe entgegenzuwirken, sind weitere vorteilhafte Ausgestaltungen vorgesehen.

Durch die Maßnahme, dass der Kopplungsabschnitt des Wischarmes wenigstens eine zur Luftdurchströmung geeignete Öffnung aufweist, wird ein unterhalb des U-Profiles des Kopplungsabschnittes entstehender Staudruck weitgehend abgebaut. Dadurch wird die Abhebekraft am Wischarm verringert.

Besonders vorteilhaft ist hierbei, die wenigstens eine Öffnung im Rücken des Kopplungsabschnittes vorzusehen. Allerdings ist auch eine Verbesserung möglich, wenn in den Schenkeln des Kopplungselementes, insbesondere in dem leeseitigen Schenkel eine oder mehrere Durchström-Öffnungen plaziert werden. Die maximale Wirkung ist hierbei wahrscheinlich durch eine Kombination der einzelnen Möglichkeiten zu erreichen.

Eine andere Ausführungsform sieht vor, dass an dem Kopplungsabschnitt des Wischarmes wenigstens ein spoilerartiges Luftleitmittel vorgesehen ist. Damit kann die anströmende Luft so geleitet werden, dass dem Effekt des Abhebens des Wischblattes bzw. des Wischarmes von der Scheibe entgegengewirkt wird. Vorteilhaft ist in diesem Zusammenhang, das wenigstens eine Luftleitmittel am Rücken des Kopplungsabschnittes anzuordnen. An diesem Ort wirkt ein Spoiler besonders effektiv.

Die Vorteile einer Ausführung, wonach das Luftleitmittel von einem aus dem Rücken des Kopplungsabschnittes freigeschnittenen und spoilerartig nach oben gebogenen Abschnitt gebildet ist, ist in der Kombination der Wirkungen des Spoilers und der so gebildeten Durchströmöffnung zu sehen. Es wird also direkt die Anpresskraft erhöht und gleichzeitig der Staudruck im Inneren des Kopplungsabschnittes verringert.
Außerdem ist ein so hergestelltes Luftleimittel besonders kostengünstig.

Eine weitere vorteilhafte Ausführung sieht vor, dass am Rücken des Verbindungselementes wenigstens ein, vorzugsweise einstückig mit dem Verbindungselement hergestelltes, spoilerartiges Luftleitmittel angeordnet ist und dass dieses wenigstens eine Luftleitmittel durch eine, vorzugsweise korrespondierende, Öffnung im Rücken des Kopplungsabschnittes hindurchragt. Da das Verbindungselement vorteilhaft aus Kunststoffmaterial gefertigt ist, sind sehr viele gestalterische Möglichkeiten für die Form des spoilerartigen Luftleitmittels im Hinblick auf besonders günstige strömungstechnische Eigenschaften gegeben.

Die eingangs genannte Aufgabe wird auch gelöst durch ein Verfahren zur Montage einer erfindungsgemäßen Vorrichtung, das sich dadurch auszeichnet, dass zur Erreichung einer Vormontageposition, in der die Längsachse des Wischarms und die Längsachse des Verbindungselements einen Winkel α im Bereich von ca. 10° bis 100° einschließen, der Einführabschnitt weitgehend geradlinig in die Aufnahme eingeführt wird, und dass zur Erreichung einer Endmontageposition der Wischarm und der Verbindungsabschnitt um den Kontaktbereich Einführabschnitt/Aufnahme aufeinander zu verschwenkt werden, bis die Sicherungsabschnitte eine gegenseitige dauerhafte Verbindung eingehen.

Weitere Vorteile und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: eine erfindungsgemäße Vorrichtung in perspektivischer Ansicht;
- Figur 2: die Vorrichtung gemäß Figur 1 ohne Wischarm;
- Figur 3: einen Teilschnitt durch die Figur 2;
- Figur 4: eine Unteransicht des in der Figur 1 dargestellten Kopplungsabschnitts;
- Figur 5: einen Teilschnitt durch die Vorrichtung gemäß Figur 1 in einer Vormontageposition;
- Figur 6: einen Teilschnitt durch die Vorrichtung gemäß Figur 5 in der Endmontageposition;
- Figur 7: eine andere Ausführung einer erfindungsgemäßen Vorrichtung in perspektivischer Ansicht;
- Figur 8: eine weitere Ausführung einer erfindungsgemäßen Vorrichtung in perspektivischer Ansicht;

- Figur 9: eine letzte Ausführung einer erfindungsgemäßen Vorrichtung in perspektivischer Ansicht;
- Figur 10: die Vorrichtung gemäß Figur 9 ohne Wischarm; und
- Figur 11: eine andere Ausführung einer erfindungsgemäßen Vorrichtung ohne Wischarm.

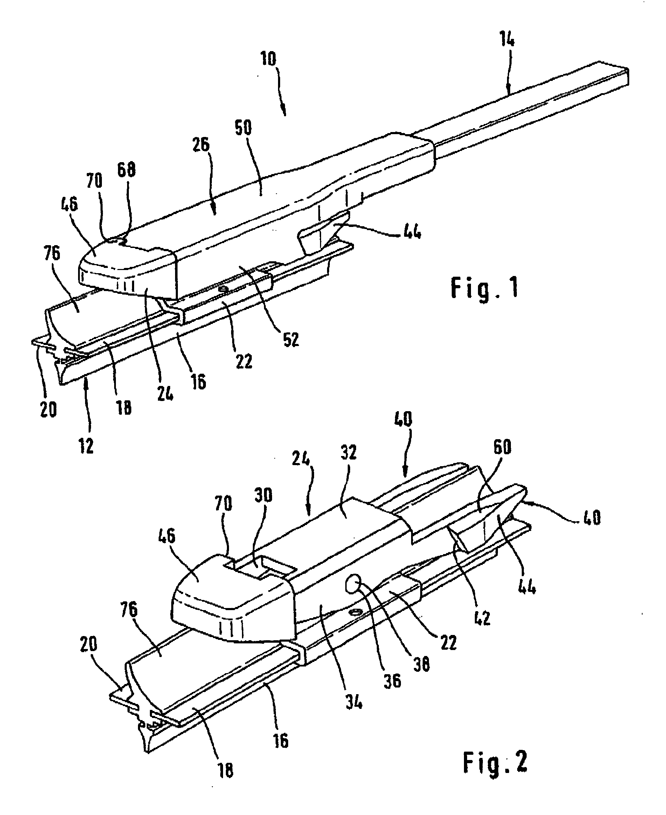

In der Figur 1 ist eine erfindungsgemäße Vorrichtung 10 zum lösbaren Verbinden eines Wischblatts 12, das ausschnittsweise dargestellt ist, mit einem antreibbaren Wischarm 14, der ebenfalls ausschnittsweise dargestellt ist, gezeigt. Das Wischblatt 12 weist eine der zu wischenden, nicht dargestellten, Scheibe zugewandte Wischleiste 16 auf, die zwei bandartig langgestreckte Trageelemente 18, 20, ein mit den Trageelementen 18, 20 verbundenes Reiterelement 22 und ein an dem Reiterelement 22 pendelbar angeordnetes Verbindungselement 24 umfasst. Das Verbindungselement 24 dient zum Anschließen an einen Kopplungsabschnitt 26 am Wischarm 14.

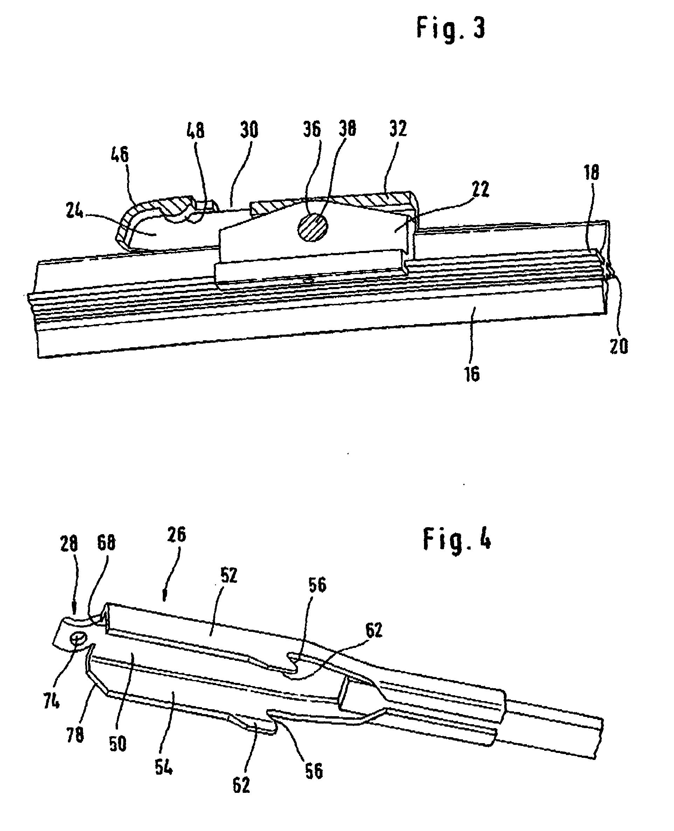

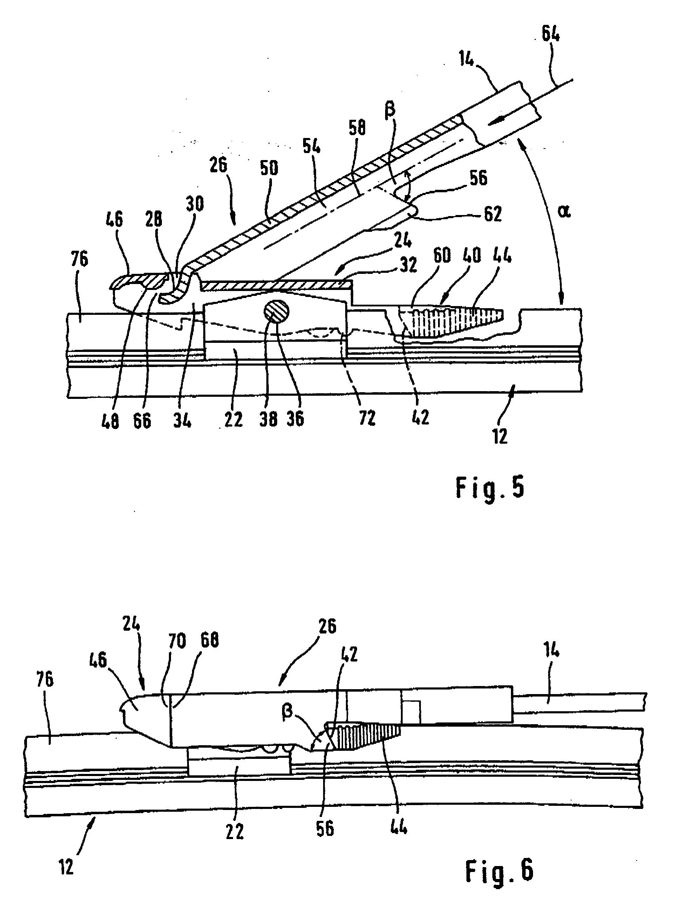

Der Kopplungsabschnitt 26 weist, wie insbesondere aus Figur 4 deutlich wird, einen zungenartigen Einführabschnitt 28 auf, der in der in den Figuren 1 und 6 gezeigten Endmontageposition in eine Aufnahme 30, die in Figur 2 deutlich zu erkennen ist, eingreift. Das Verbindungselement 24, das ebenso wie der Kopplungsabschnitt 26, im Querschnitt U-förmig ausgebildet ist, weist einen Rücken 32 und zwei Schenkel 34 auf. Die Aufnahme 30 ist im Rücken 32 des Verbindungselements 24 vorgesehen. An den Schenkeln 34 des Verbindungselements 24 ist eine sich in Querrichtung erstreckende Lageraufnahme 36 für einen Lagerbolzen 38 vorgesehen. Aufgrund der Lageraufnahme 36, beziehungsweise des Lagerbolzens 38, wird eine pendelnde Anordnung des Verbindungselements 24 gegenüber dem Reiterelement 22 erreicht. Um eine gewisse Flexibilität der Schenkel 34 bei ausreichender Steifigkeit zu erreichen, sind die Schenkel 34 doppelwandig ausgeführt.

Wie ebenfalls aus Figur 2 deutlich wird, weist das Verbindungselement 24 auf seiner in Längsrichtung der Einführöffnung 30 abgewandten Seite an den Schenkeln 24 jeweils eine sich in Längsrichtung erstreckende, in Querrichtung elastisch nachgiebige Rastzunge 40 auf. Die Rastzungen 40 umfassen jeweils eine Rastkante 42 und einen Betätigungsabschnitt 44. Der Bereich des Verbindungselements 24, der in der Endmontageposition von dem Kopplungsabschnitt 26 abgedeckt wird, liegt gegenüber den restlichen Bereichen des Verbindungselements 24, die im Wesentlichen von den beiden Betätigungsabschnitten 24 und einem in axialer Verlängerung des Kopplungsabschnitts liegenden Kopfabschnitt 46 gebildet sind, zurückversetzt. Dadurch wird erreicht, dass in der Endmontageposition der Kopplungsabschnitt 26 und das Verbindungselement 24 eine weitgehend geschlossene und weitgehend glatte Oberfläche bilden.

Wie aus der Figur 3 deutlich wird, ist der mit dem Einführabschnitt 28 zusammenwirkende, an die Einführöffnung 30 angrenzende Bereich 48 komplementär zum Einführabschnitt 28 ausgebildet. Der Einführabschnitt 28 ist, wie aus den Figuren 4 und 5 deutlich wird, in Richtung der Verlängerung des Wischarms 14 und in Seitenansicht in Richtung der zu wischenden Scheibe bogenartig ausgebildet. Entsprechend ist, wie den Figuren 3 und 5 entnommen werden kann, der Bereich 48 ebenfalls bogenartig, beziehungsweise kreissegmentartig, ausgebildet.

Aus Figur 4 wird deutlich, dass der Kopplungsabschnitt im Querschnitt U-förmig ausgebildet ist und einen Rücken 50 und sich an den Rücken anschließende Schenkel 52, 54 aufweist. Der Einführabschnitt 28 ist dabei in Verlängerung des Rückens 50 freistehend angeordnet. An den Schenkeln 52, 54 sind Rastkanten 56 vorgesehen, die mit der Längsachse 58 des Wischarms 14, einen Winkel β im Bereich von ca. 70° einschließen (vergl. Figuren 5 und 6). Die Rastkanten 42 der Rastzungen 40 schließen einen entsprechenden Winkel β ein. In der Endmontageposition gemäß Figur 6 liegen die Rastkanten 42 der Rastzungen 40 an den Rastkanten 56 der Schenkel 52, 54 des Kopplungsabschnitts 26 an.

Den Figuren 2 und 5 kann entnommen werden, dass die dem Rücken 50 des Kopplungsabschnitts 26 zugewandten Seiten 60 der Rastzungen 40 leicht angeschrägt sind. Entsprechend sind die der Scheibe zugewandten, beim Verschwenken in die Endmontageposition mit den Seiten 60 der Kopplungsabschnitte 26 zusammenwirkenden Seiten 62 der Schenkel des Kopplungsabschnitts 26 ebenfalls leicht angeschrägt.

Zur Montage des Kopplungsabschnitts 26 mit dem Verbindungselement 24 wird zur Erreichung einer Vormontageposition, die in der Figur 5 dargestellt ist, der Einführabschnitt 28 weitgehend geradlinig entlang des Pfeiles 64 in die Aufnahme 30 eingeführt. In dieser Vormontageposition schließt die Längsachse des Wischarms 14 und die Längsachse des Verbindungselements 24 beziehungsweise des Wischblatts 12 einen Winkel α ein, der im Bereich von ca. 10 bis 100° liegen kann. Bei dem in der Figur 5 dargestellten Ausführungsbeispiel weist der Winkel α einen Wert von ca. 40° auf. Zur Erreichung der Endmontageposition, die in Figur 1 und Figur 6 dargestellt ist, werden der Wischarm 14 und der Verbindungsabschnitt 24 um den Kontaktbereich 66, in dem der Einführabschnitt 28 an dem Bereich 48 der Aufnahme 30 anliegt, aufeinander zu verschwenkt. Aufgrund der komplementären Ausbildung des Einführabschnitts 28 und des Bereichs 48 wird der Schwenkvorgang bedingt geführt. Kurz vor Erreichen der Endmontageposition treffen die angeschrägten Seiten 62 des Kopplungsabschnitts 26 und die entsprechend angeschrägten Seiten 60 der Rastzungen 40 derart aufeinander, dass die Rastzungen 40 in einander zugewandter Richtung elastisch ausgelenkt werden. Bei Erreichen der Endmontageposition hinterschnappen die Rastzungen 40 in einander abgewandten Richtungen die Rastkanten 56 der Schenkel 52, 54 des Kopplungsabschnitts 26. Dadurch wird der Kopplungsabschnitt 26 in der Endmontageposition am Verbindungselement 24 dauerhaft gehalten. In der Endmontageposition liegt der Kopplungsabschnitt 28 großflächig am Bereich 48 des Verbindungselements 24 an. Ferner liegt die dem Kopfbereich 46 des Verbindungselements 24 zugewandte Stirnseite 68 des Kopplungsabschnitts 26 an einer mit ihr korrespondierenden Anlagekante 70 des Verbindungselements an.

Aufgrund der nicht senkrecht zur Wischblattlängsachse, sondern mit der Längsachse einen spitzen Winkel β einschließenden Rastkanten 42, 56 wird erreicht, dass im montierten Zustand der Kopplungsabschnitt 26 in Richtung des Kopfabschnitts 46 beaufschlagt wird. Dadurch ergibt sich eine spielfreie Verbindung in axialer Richtung. Außerdem wird durch die schräg angeordneten Rastkanten 42, 56 der Kopplungsabschnitt 26 in Richtung des Wischblatts 12 beaufschlagt, wodurch eine spielfreie Verbindung in zum Wischblatt senkrechter Richtung realisiert wird. Der Einführabschnitt 28 liegt dabei unter geringer Vorspannung an dem Kontaktbereich 48 des Verbindungselements 24 an.

Zu Lösen der Verbindung werden die Betätigungsabschnitte 44 in einander zugewandter Richtung zusammengedrückt. Dadurch gelangen die Rastkanten 42 der Rastzungen 40 aus dem Eingriffsbereich der Rastkanten 56 des Kopplungsabschnitts 26. Da die Betätigungsabschnitte einander gegenüberliegend angeordnet sind, kann das Zusammendrücken der Betätigungsabschnitte 44 durch einen einfachen Handgriff, mittels einer Hand, bewerkstelligt werden. Der Kopplungsabschnitt 26 wird dann vom Verbindungselement 24 weggeschwenkt, bis zirka die in der Figur 5 erreichte Vormontageposition erreicht ist. Anschließend wird der Einführabschnitt 28 aus der Aufnahme 30 in der dem Pfeil 64 entgegengesetzten Richtung herausgeführt.

Wie in der Figur 5 deutlich zu erkennen ist, kann vorgesehen sein, dass die Schenkel 34 des Verbindungselements auf der der Scheibe zugewandten Seite nasenartige Erhebungen 72 aufweisen. Diese dienen zur Abstützung am Reiterelement 22. Die Erhebungen 22 schränken den Pendelbereich des Verbindungselements 24 gegenüber dem Reiterelement 22 bedingt ein. Hierdurch wird eine erleichterte Montage und Demontage des Wischblatts 12 vom Wischarm 14 möglich.

Im gebogenen Bereich des Einführabschnitts 28 ist eine Materialaussparung in Form eines kreiszylindrischen Loches 74 vorgesehen.

Um zu verhindern, dass das Wischblatt, das auf seiner der Wischleiste 16 abgewandten Seite einen spoilerartigen Ansatz 76 aufweist, an den falschen Wischarm montiert werden kann, kann an dem Verbindungselement 24 und an dem Kopplungsabschnitt 26 eine Codierung vorgesehen sein. Eine derartige Codierung kann beispielsweise durch eine abgeschrägte Ecke 78 am Schenkel 54 des Kopplungsabschnitts 26 realisiert sein, was in Figur 4 entsprechend dargestellt ist. Die abgeflachte Ecke 78 kann hierbei mit einem in den Figuren nicht dargestellten, komplementär ausgebildeten Materialauftrag an der entsprechenden Stelle des Verbindungselements 24 korrespondieren. Da lediglich eines von beiden Wischblättern, das jeweils rechte oder jeweils linke Wischblatt, einen entsprechenden Materialauftrag am Verbindungselement vorsieht, wird eine eindeutige Zuordnung des rechten beziehungsweise linken Wischblatts zu dem rechten beziehungsweise linken Wischarm gewährleistet.

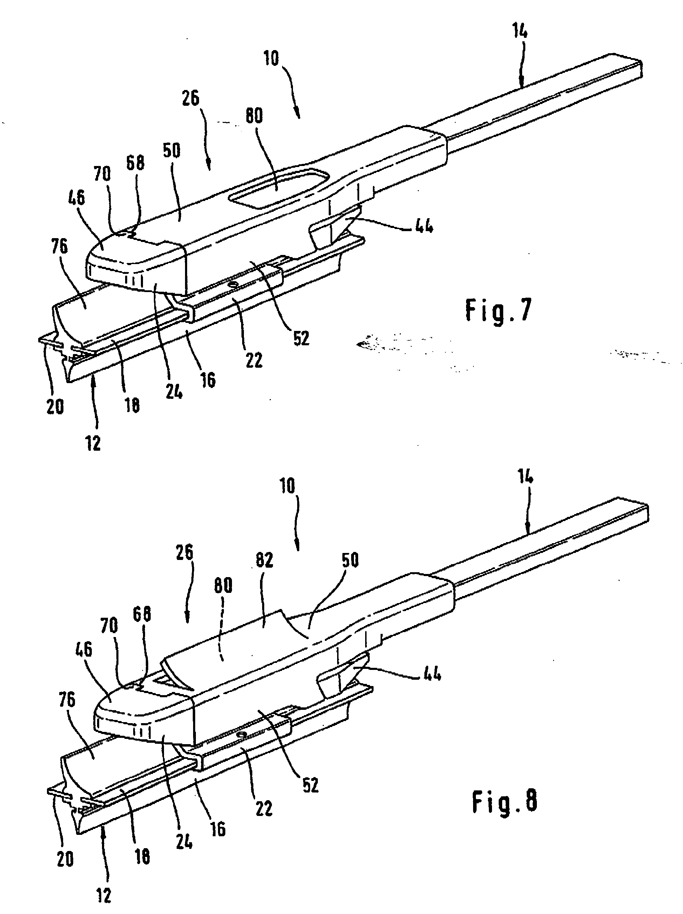

Für das in Figur 7 dargestellte Ausführungsbeispiel gilt generell die gleiche vorstehende Beschreibung zu dem in den Figuren 1 bis 6 dargestellten ersten Ausführungsbeispiel.

Deshalb wurden in Figur 7 auch die gleichen Bezugszeichen wie in Figur 1 benutzt.
Der wesentlichen Unterschied des Ausführungsbeispiels gemäß Figur 7 besteht darin, dass im Rücken 50 des zu dem Wischarm 14 gehörenden Kopplungsabschnittes 26 zusätzlich eine Öffnung 80 vorgesehen ist. Diese Öffnung 80 erlaubt, dass unter das U-Profil des Kopplungsabschnittes strömende Luft auf relativ kurzem Weg den unter dem U-Profil gebildeten Raum verlassen kann, indem sie die Öffnung 80 durchströmt. Auf diese Weise wird der Staudruck unterhalb des Kopplungsabschnittes 26 gegenüber einer Ausführung ohne die Öffnung 80 verringert, was zur vergleichsweisen Verringerung der Abhebekraft des Wischarmes 14 bei Anströmung führt.

Anstelle der einen Öffnung 80 könnten auch mehrere Öffnungen 80 in dem Kopplungsabschnitt 26 vorgesehen sein, wobei eine oder mehrere Öffnungen 80 auch in einem der beiden Schenkel 52, 54 oder in beiden Schenkeln 52, 54 angebracht sein können. Die Größe, die Form und die Position der einen oder mehreren Öffnungen 80 sollte im Hinblick auf einen größtmöglichen Wirkungseffekt in Abhängigkeit von den geometrischen Gegebenheiten der einzelnen Bestandteile der Vorrichtung 10 bzw. der Vorrichtung 10 insgesamt optimiert werden. Ebenso können Form und Größe der einen oder mehreren Öffnungen 80 dem Design des Kopplungsabschnittes 26 angepasst sein.

Auch für das in Figur 8 dargestellte, weitere Ausführungsbeispiel gilt generell die gleiche vorstehende Beschreibung zu dem in den Figuren 1 bis 6 dargestellten ersten Ausführungsbeispiel.
Der wesentlichen Unterschied des Ausführungsbeispiels gemäß Figur 8 besteht darin, dass am Rücken 50 des Kopplungsabschnittes 26 ein spoilerartiges Luftleitmittel 82 ausgebildet ist. Zur Herstellung des Luftleitmittels 82 wurde aus dem Rücken 50 des Kopplungsabschnittes 26 ein etwa rechteckiger Abschnitt, der in Längsrichtung des Kopplungsabschnittes 26 orientiert ist, an seinen zwei Schmalseiten und an einer Längsseite freigeschnitten bzw. freigestanzt und nach oben aus der Ebene des Rückens 50 herausgebogen. Dabei kann dem Luftleitmittel 82 eine gerundete, flügelartige Form gegeben werden. Das Luftleitmittel 82 ist an seiner der anströmenden Luft zugewandten Längsseite mit dem Rücken 50 verbunden. Durch das Herausbiegen wurde hinter dem Luftleitmittel 82 gleichzeitig die Öffnung 80 im Rücken 50 gebildet, welche von einem Luftstrom durchströmt werden kann. In der Figur 8 ist die zum Bezugszeichen 80 gehörende Bezugslinie gestrichelt gezeichnet, weil die Sicht auf die Öffnung 80 in dieser Perspektive durch das Luftleitmittel 82 verdeckt ist. Das Luftleitmittel 82 und die Öffnung 80 können wirtschaftlich günstig durch Stanzen und Biegen während des Herstellungsprozesses des Kopplungsabschnittes als Stanz-Biege-Teil aus Blech erzeugt werden.

Die aerodynamischen Vorteile einer derartigen Ausführung ergeben sich einmal aus der durch das Luftleitmittel 82 erzeugten Anpresskraft, die auf den Wischarm 14 wirkt, und zum anderen aus der Verringerung des Staudruckes unterhalb des U-Profiles des Kopplungsabschnittes 26.

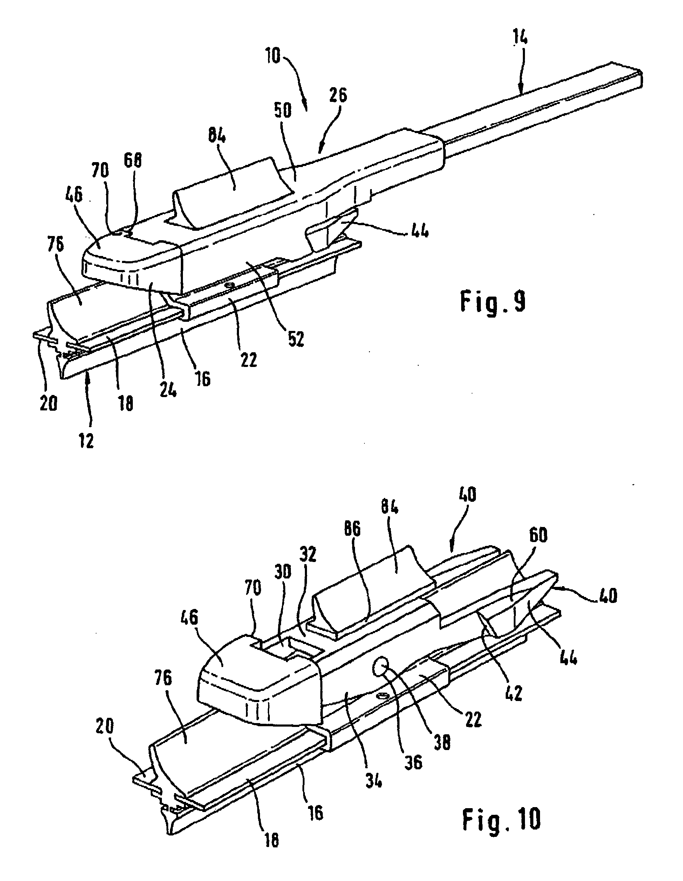

Die Besonderheit des Ausführungsbeispiels gemäß Figuren 9 und 10 besteht darin, dass im Rücken 50 des Kopplungsabschnittes 26 eine Öffnung vorgesehen ist und dass ein am Rücken 32 des Verbindungselementes 24 angeordnetes spoilerartiges Luftleitmittel 84 durch diese Öffnung hindurch bis an die Oberseite des Kopplungsabschnittes 26 reicht. Bei Anströmung des Luftleitmittels 84 wird die Anpresskraft des Wischarmes 14 erhöht bzw. die Abhebekraft verringert.

In Figur 9 ist zu sehen, dass die Form und die Größe der Öffnung im Kopplungsabschnitt 26 und der Grundfläche des Luftleitmittels 84 aneinander angepasst sind. Außerdem ist das Luftleitmittel 84 über einen Sockel 86 mit dem Rücken 32 des Verbindungselementes 24 verbunden. Die Höhe des Sockels 86 entspricht der Wanddicke des Rückens 50 des Kopplungsabschnittes 26, so dass die Oberseite des Rückens 50 zumindest nahezu spaltfrei bzw. absatzlos an das Luftleitmittel 84 angrenzt. Dadurch wird die Aerodynamik verbessert, und Strömungsgeräusche werden verringert.

Abweichend von der Darstellung in den Figuren 9 und 10 kann vorteilhaft auch die Öffnung im Rücken 50 des Kopplungsabschnitts 26 größer sein als die Grundfläche des Luftleitmittels 84 bzw. dessen Sockels 86. In diesem Fall wäre nur ein Teil der Öffnung von dem Luftleitmittel 84 ausgefüllt. Der nicht ausgefüllte Teil der Öffnung wirkt somit als Durchstromöffnung, womit wiederum der Staudruck unter dem U-Profil des Kopplungsabschnittes 26 verringert wird.
Diese Ausführung ist in der Zeichnung nicht dargestellt.

Eine weitere in der Zeichnung nicht dargestellte Ausführung besteht darin, dass bei einer Vorrichtung gemäß Figuren 9 und 10 zusätzlich wenigstens eine Öffnung im Rücken und/oder in wenigstens einem der Schenkel 52, 54 zum Abbau des Staudruckes unter dem U-Profil des Kopplungsabschnittes 26 vorgesehen ist.

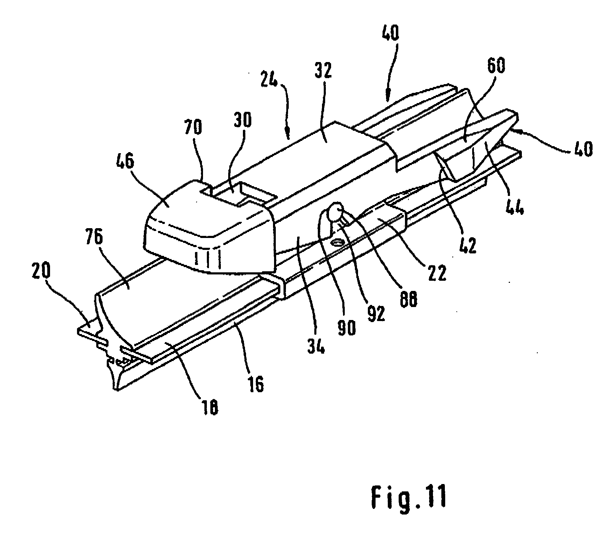

Ein letztes Ausführungsbeispiel ist in Figur 11 gezeigt. Dieses Ausführungsbeispiel entspricht in sehr vielen Merkmalen der in Figur 2 gezeigten Ausführung, weshalb der grundsätzliche Aufbau hier nicht noch einmal wiederholt wird und für gleiche Teile bzw. Elemente die gleichen Bezugszahlen verwendet werden.

Bei dem Ausführungsbeispiel gemäß Figur 11 weist das Reiterelement 22 zwei fluchtend zueinander angeordnete Lagerzapfen 88 auf, die quer zur Längsrichtung des Wischblattes 12 von dem Reiterelement 22 abstehen. Die Lagerzapfen 88, von denen auf Grund der Perspektive in Figur 11 nur einer zu sehen ist, sind einstückig mit dem Reiterelement 22 ausgebildet. Das Reiterelement 22 ist vorteilhaft insgesamt als Metall-Druckgußteil oder als Kunststoffspritzgußteil zu fertigen.

In den beiden Schenkeln 34 des im Querschnitt im wesentlichen ein U-Profil aufweisenden Verbindungselements 24 sind miteinander fluchtende Lagerbohrungen 90 ausgebildet, von denen auf Grund der Perspektive in der Figur 11 wiederum nur eine zu sehen ist. Die Lagerbohrungen 90 sind so an die Lagerzapfen 88 angepasst, dass ein möglichst spielfreies Verschwenken des Reiterelements 22 relativ zu dem Verbindungselement 24 erfolgen kann. Ein wesentlicher Unterschied zu der Ausführung gemäß Figur 2 besteht nun darin, dass die Lagerbohrungen 90 jeweils über einen von der Lagerbohrung 90 zu dem unteren, d. h. dem Rücken 32 des Verbindungselementes 24 entgegengesetzten, Rand des Schenkels 34 verlaufenden Schlitz 92 radial geöffnet sind. Der Schlitz 92 erweitert sich dabei ausgehend von dem Rand der Lagerbohrung 90 zu dem Rand des Schenkels 34 hin. Die Engstelle des Schlitzes 92 ist dabei schaler als der Durchmesser des jeweiligen Lagerzapfens 88. Bei der Montage oder Demontage von Reiterelement 22 und Verbindungselement 24 werden die Lagerzapfen 88 in der Art einer Rastverbindung unter Überwindung der Engstelle radial durch die Schlitze 92 hindurch in die Lagerbohrungen 90 hinein oder aus diesen heraus gedrückt. Dadurch werden diese Prozesse wesentlich vereinfacht, andererseits ist ein ausreichend sicherer Sitz oder Halt der Lagerzapfen 88 in den Lagerbohrungen 90 gewährleistet.

Normalerweise erfolgt das Verbinden eines mit einem solchen Reiterelement 22 und einem solchen Verbindungselement 24 versehenen Wischblattes 12 an einem Wischarm 14 bzw. dem Kopplungsabschnitt 26 eines Wischarmes 14 als auch umgekehrt dessen Entfernen in der gleichen generellen Art, wie es im Zusammenhang mit den Figuren 1 bis 6 beschrieben worden ist.

Bei der Ausführung gemäß Figur 11 besteht aber auch die Möglichkeit, zuerst das von dem Wischblatt 12 separiert vorliegende Verbindungselement 24 im Sinne dieser generellen Art am Kopplungsabschnitt 26 des Wischarmes 14 anzubringen und danach das mit dem Wischblatt 12 verbundene Reiterelement 24 an dem Verbindungselement 24 zu montieren, indem man die Lagerzapfen 88 radial durch die Schlitze 92 in die Lagerbohrungen 90 eindrückt. Es ist auch denkbar, eine Demontage in umgekehrter Reihenfolge dieser zuletzt angegebenen Schritte durchzuführen.

Vorrichtungen zum lösbaren Verbinden eines Wischblattes mit einem Wischarm entsprechend den Ausführungsbeispielen gemäß den Figuren 1 bis 10 sind insbesondere für die Verwendung in Wischanlagen für Frontscheiben von Fahrzeugen geeignet, während die Vorrichtung entsprechend dem Ausführungsbeispiel gemäß Figur 11 insbesondere für die Verwendung in Wischanlagen für Heckscheiben von Fahrzeugen geeignet ist.

Sämtliche in der Beschreibung, den Zeichnungen und den Ansprüchen zu entnehmenden Merkmale können sowohl einzeln, als auch in beliebiger Kombination miteinander erfindungswesentlich sein.

## Patentansprüche

1. Wischblatt zum lösbaren Verbinden mit einem Wischarm, umfassend eine der zu wischenden Scheibe zugewandte Wischleiste (16), wenigstens ein bandartig langgestrecktes Tragelement (18, 20), ein mit dem Tragelement (18, 20) verbundenes Reiterelement (22), und ein an dem Reiterelement (22) pendelbar gelagertes Verbindungselement (24) zum Anschließen an einen einen zungenartigen Einführabschnitt (28) aufweisenden Kopplungsabschnitt (26) des Wischarms (14), **dadurch gekennzeichnet, dass** das Verbindungselement (24) des Wischblattes (12) eine Aufnahme (30) für den zungenartigen Einführabschnitt (28) des Kopplungsabschnittes (26) des Wischarms (14) und Sicherungsabschnitte (42) zur gegenseitigen dauerhaften Verbindung mit dem Kopplungsabschnitt (26) des Wischarms (14) über am Kopplungsabschnitt (26) vorgesehene Sicherungsabschnitte (56) aufweist,
wobei zur Erreichung einer Vormontageposition, in der die Längsachse des Wischarms (14) und die Längsachse des Verbindungselements (24) einen Winkel α im Bereich von ca. 10° bis 100° einschließen, der Einführabschnitt (28) weitgehend geradlinig in die Aufnahme (30) einführbar ist, und
wobei zur Erreichung einer Endmontageposition der Wischarm (14) und der Verbindungsabschnitt (24) um den Kontaktbereich Einführabschnitt/Aufnahme aufeinander zu verschwenkbar sind, bis die Sicherungsabschnitte (40, 42, 56) eine gegenseitige dauerhafte Verbindung ermöglichen.

2. Wischblatt nach Anspruch 1, **dadurch gekennzeichnet, dass** die Einführrichtung (64) zur Erreichung der Vormontageposition in der Schwenkebene zur Erreichung der Endmontageposition liegt.

3. Wischblatt nach Anspruch 1 oder 2, **dadurch gekennzeichnet, dass** der zum Zusammenwirken mit dem Einführabschnitt (28) des Wischarmes vorgesehene, an die Einführöffnung (30) angrenzende Bereich (48) des Verbindungselements (24) komplementär zum Einführabschnitt (28) ausgebildet ist.

4. Wischblatt nach einem der vorhergehenden Ansprüche, **dadurch gekennzeichnet, dass** der zum Zusammenwirken mit dem Einführabschnitt (28) des Wischarmes vorgesehene Bereich (48) des Verbindungselements (24) im Längsschnitt bogenartig, und insbesondere kreissegmentartig, ausgebildet ist.

5. Wischblatt nach einem der vorhergehenden Ansprüche, **dadurch gekennzeichnet, dass** das Verbindungselement (24) im Querschnitt U-förmig ausgebildet ist und einen Rücken (32) und zwei Schenkel (34) umfasst.

6. Wischblatt nach Anspruch 5, **dadurch gekennzeichnet, dass** die Einführöffnung (30) als Aussparung am Rücken (32) ausgebildet ist.

7. Wischblatt nach einem der vorhergehenden Ansprüche, **dadurch gekennzeichnet, dass** die Sicherungsabschnitte als Rastabschnitte (40, 42) ausgebildet sind.

8. Wischblatt nach einem der vorhergehenden Ansprüche, **dadurch gekennzeichnet, dass** das Verbindungselement (24) auf seiner in Längsrichtung der Einführöffnung (30) abgewandten Seite an den Schenkeln (34) jeweils eine sich in Längsrichtung erstreckende, in Querrichtung elastisch nachgiebige Rastzunge (40) aufweist, die zum Zusammenwirken mit an dem Kopplungsabschnitt (26) des Wischarmes vorgesehenen Rastkanten (56) ausgebildet sind.

9. Wischblatt nach Anspruch 8, **dadurch gekennzeichnet, dass** die Rastkanten (42) der Rastzungen (40) mit der Längsachse einen spitzen Winkel β einschließen, wobei der Winkel β ca. 30° bis 80° beträgt.

10. Wischblatt nach einem der Ansprüche 8 oder 9, **dadurch gekennzeichnet, dass** die dem Rücken (50) des Kopplungsabschnitts (26) zugewandten Seiten (60) der Rastzungen (40) zur leichteren Verrastung entsprechend angeschrägt sind.

11. Wischblatt nach einem der vorhergehenden Ansprüche, **dadurch gekennzeichnet, dass** das Reiterelement (22) einen mit seinen Enden von dem Reiterelement (22) abragenden Lagerbolzen bzw. alternativ dazu zwei Gelenkzapfen (88) aufweist, auf denen das Verbindungselement (24) mit in seinen Schenkeln (34) ausgebildeten korrespondierenden und fluchtend angeordneten Lagerbohrungen (90) verschwenkbar gelagert ist.

12. Wischblatt nach Anspruch 11, **dadurch gekennzeichnet, dass** die in den Schenkeln (34) des Verbindungselementes (24) vorgesehenen Lagerbohrungen (90) über jeweils einen radial zu der Lagerbohrung verlaufenden Schlitz (92) geöffnet sind.

13. Wischblatt nach Anspruch 12, **dadurch gekennzeichnet, dass** sich jeweils der Schlitz (92) ausgehend von der Lagerbohrung (90) zum Rand des Schenkels (34) hin erweitert, wobei die engste Stelle des Schlitzes (92) kleiner ist als der Durchmesser des Lagerbolzens bzw. der alternativen Lagerzapfen (88).

14. Wischarm mit einem Kopplungsabschnitt (26), mit welchem ein Wischblatt (12) lösbar verbindbar ist, wobei das Wischblatt (12) eine der zu wischenden Scheibe zugewandte Wischleiste (16), wenigstens ein bandartig langgestrecktes Tragelement (18, 20), ein mit dem Tragelement (18, 20) verbundenes Reiterelement (22) und ein an dem Reiterelement (22) pendelbar gelagertes Verbindungselement (24) zum Anschließen an den Kopplungsabschnitt (26) des Wischarms umfasst, und wobei das Verbindungselement (24) eine Aufnahme (30) für den Einführabschnitt (28) und Sicherungsabschnitte (42) aufweist **dadurch gekennzeichnet, dass** der Kopplungsabschnitt (26) einen zungenartigen Einführabschnitt (28) aufweist und Sicherungsabschnitte (56) zur gegenseitigen dauerhaften Verbindung mit dem Verbindungselement (24) des Wischblattes (12) über die Sicherungsabschnitte (42) des Verbindungselementes (24) des Wischblattes (12) aufweist,
wobei zur Erreichung einer Vormontageposition, in der die Längsachse des Wischarms (14) und die Längsachse des Verbindungselements (24) einen Winkel α im Bereich von ca. 10° bis 100° einschließen, der Einführabschnitt (28) weitgehend geradlinig (64) in die Aufnahme (30) einführbar ist, und
wobei zur Erreichung einer Endmontageposition der Wischarm (14) und der Verbindungsabschnitt (24) um den Kontaktbereich Einführabschnitt/Aufnahme aufeinander zu verschwenkbar sind, bis die Sicherungsabschnitte (42, 56) eine gegenseitige dauerhafte Verbindung ermöglichen.

15. Wischarm nach Anspruch 14, **dadurch gekennzeichnet, dass** der Kopplungsabschnitt (26) im Querschnitt U-förmig ausgebildet ist und einen Rücken (50) und zwei Schenkel (52, 54) umfasst, wobei der Einführabschnitt (28) hakenartig ausgebildet und am Rücken (50) des Kopplungsabschnitts (26) angeordnet ist.

16. Wischarm nach Anspruch 15 **dadurch gekennzeichnet, dass** der Einführabschnitt (28) am freien Ende, in Richtung der Verlängerung des Wischarms (14) und in Seitenansicht in Richtung der zu wischenden Scheibe derart bogenartig ausgebildet ist, dass er den Rücken (50) nicht überragt.

17. Wischarm nach einem der Ansprüche 14 bis 16, **dadurch gekennzeichnet, dass** der Einführabschnitt (28) im Längsschnitt bogenartig, und insbesondere kreissegmentartig, ausgebildet ist.

18. Wischarm nach einem der Ansprüche 14 bis 17, **dadurch gekennzeichnet, dass** an Schenkeln (52, 54) des Kopplungsabschnitts (26) Rastkanten (56) zum Zusammenwirken mit an dem Verbindungselement (24) vorhandenen Rastzungen (40) vorgesehen sind, wobei vorzugsweise die Rastkanten (56) der Schenkel (52, 54) mit der Längsachse einen spitzen Winkel einschließen, der insbesondere 30° bis 80° beträgt

19. Wischarm nach einem der Ansprüche 14 bis 18, **dadurch gekennzeichnet, dass** die der Scheibe zugewandten Seiten der Schenkel (52, 54) des Kopplungsabschnitts (26) zur leichteren Verrastung entsprechend angeschrägt sind.

20. Wischarm nach einem der Ansprüche 14 bis 19, **dadurch gekennzeichnet, dass** der Kopplungsabschnitt (26) des Wischarmes (14) wenigstens eine zur Luftdurchströmung geeignete Öffnung (80) aufweist, die vorzugsweise im Rücken (50) des Kopplungsabschnittes (26) vorgesehen ist.

21. Wischarm nach einem der vorhergehenden Ansprüche 14 bis 20, **dadurch gekennzeichnet, dass** an dem Kopplungsabschnitt (26) des Wischarmes (14), vorzugsweise am Rücken des Kopplungsabschnittes (26), wenigstens ein spoilerartiges Luftleitmittel (82) vorgesehen ist.

22. Wischarm nach Anspruch 21, **dadurch gekennzeichnet, dass** das Luftleitmittel (82) von einem aus dem Rücken (50) des Kopplungsabschnittes (26) freigeschnittenen und spoilerartig nach oben gebogenen Abschnitt gebildet ist.

## Claims

1. Wiper blade for detachable fixing to a wiper arm, comprising a wiper strip (16) facing the windscreen to be wiped, at least one strip-like elongated carrier element (18, 20), a slide element (22) connected to the carrier element (18, 20) and a connecting element (24) carried in pendulum bearing on the slide element (22) for connection to a coupling section (26) of the wiper arm (14) presenting a tongue-like insertion section (28), **characterised in that** the connecting element (24) of the wiper blade (12) has a receptacle (30) for the tongue-like insertion section (28) of the coupling section (26) of the wiper arm (14) and securing sections (42) for mutual permanent connection to the coupling section (26) of the wiper arm (14) through securing sections (56) provided on the coupling section (26), with in order to achieve a preassembly position in which the longitudinal axis of the wiper arm (14) and the longitudinal axis of the connecting element 24) form an angle α in a range of approx. 10° to 100° degrees, the insertion section (28) being essentially insertable linearly into the receptacle (30) and with in order to achieve a final assembly position of the wiper arm (14) and the connecting section (24) their being pivotable on one another around the contact area of the insertion section/receptacle until the securing sections (40, 42, 56) allow a permanent connection in relation to one another.

2. Wiper blade according to claim 1, **characterised in that** the insertion device (64) for achieving the preassembly position lies in the pivoting plane for achieving the final assembly position.

3. Wiper blade according to claim 1 or 2, **characterised in that** the area (48) of the connecting element (24) adjacent to the insertion opening (30) provided for interaction with the insertion section (28) of the wiper arm is designed complementarily to the insertion section (28).

4. Wiper blade according to one of the above claims, **characterised in that** the area (48) of the connecting element (24) provided for interaction with the insertion section (28) of the wiper arm is designed in the form of an arc in its longitudinal section and particularly in the form of a segment of a circle.

5. Wiper blade according to one of the above claims, **characterised in that** the connecting element (24) is designed with a U-shaped cross-section and comprises a back (32) and two sides (34).

6. Wiper blade according to claim 5, **characterised in that** the insertion opening (30) is designed as a recess in the back (32).

7. Wiper blade according to one of the above claims, **characterised in that** the securing sections are designed as snap-fit sections (40, 42).

8. Wiper blade according to one of the above claims, **characterised in that** the connecting element (24), on its side facing away from the insertion opening (30) in the longitudinal direction, has on the sides (34) a snap-in pin (40) respectively extending in the longitudinal direction and flexible in the transverse direction, designed for interaction with locking edges (56) provided on the coupling section (26) of the wiper arm.

9. Wiper blade according to claim 8, **characterised in that** the locking edges (42) of the snap-in pins (40) form an acute angle β with the longitudinal axis, with the angle β amounting to approx. 30° to 80°.

10. Wiper blade according to one of claims 8 or 9, **characterised in that** the sides (60) of the snap-in pins (40) facing the back (50) of the coupling section (26) are bevelled accordingly in order to facilitate locking.

11. Wiper blade according to one of the above claims, **characterised in that** the slide element (22) has a bearing bolt or alternatively two link pins (88), the ends of which project from the slide element (22), on which (ends) the connecting element (24) with corresponding and aligned bearing bores (90) formed in its sides (34) is pivot-mounted.

12. Wiper blade according to claim 11, **characterised in that** the bearing bores (90) provided in the sides (34) of the connecting element (24) are open via a slot (92) running respectively radially to the bearing bore.

13. Wiper blade according to claim 12, **characterised in that** the slot (92) enlarges respectively from the bearing bore (90) to the edge of the side (34), with the narrowest position of the slot (92) being smaller than the diameter of the bearing bolt or the alternative link pins (88).

14. Wiper arm with a coupling section (26), to which a wiper blade (12) is detachably fixed, with the wiper blade (12) comprising a wiper strip (16) facing the windscreen to be wiped, at least one strip-like elongated carrier element (18, 20), a slide element (22) connected to the carrier element (18, 20) and a connecting element (24) carried in pendulum bearing on the slide element (22) for connection to the coupling section (26) of the wiper arm and with the connecting element (24) having a receptacle (30) for the insertion section (28) and securing sections (42) **characterised in that** the coupling section (26) has a tongue-like insertion section (28) and securing sections (56) for mutual permanent connection to the connecting element (24) of the wiper blade (12) through the securing sections (42) of the connecting element (24) of the wiper blade (12), with in order to achieve a preassembly position, in which the longitudinal axis of the wiper arm (14) and the longitudinal axis of the connecting element (24) form an angle α in a range of approx. 10° to 100°, the insertion section (28) being essentially insertable linearly (64) into the receptacle (30) and with in order to achieve a final assembly position of the wiper arm (14) and the connecting section (24), their being pivotable on one another around the contact area of the insertion section/receptacle, until the securing sections (42, 56) allow a permanent connection in relation to one another.

15. Wiper arm according to claim 14, **characterised in that** the coupling section (26) is designed with a U-shaped cross-section and comprises a back (50) and two sides (52, 54), with the insertion section (28) being designed in the manner of a hook and is arranged on the back (50) of the coupling section (26).

16. Wiper arm according to claim 15, **characterised in that** the insertion section (28) at its free end, in the direction of the extension of the wiper arm (14) and in a side view in the direction of the windscreen to be wiped is designed in the form of an arc such that it does not project over the back (50).

17. Wiper arm according to one of claims 14 to 16, **characterised in that** the insertion section (28) is designed in the form of an arc in its longitudinal section and particularly in the form of a segment of a circle.

18. Wiper arm according to one of claims 14 to 17, **characterised in that** on the sides (52, 54) of the coupling section (26), locking edges (56) for interaction with snap-in pins (40) present on the connecting element (24) are provided, with the locking edges (56) of the sides (52, 54) preferably forming an acute angle with the longitudinal axis, which particularly amounts to 30° to 80°.

19. Wiper arm according to one of claims 14 to 18, **characterised in that** the faces of the sides (52, 54) of the coupling section (26) facing towards the windscreen are bevelled accordingly in order to facilitate locking.

20. Wiper arm according to one of claims 14 to 19, **characterised in that** the coupling section (26) of the wiper arm (14) has at least one suitable opening (80) for flow-through of air, which is preferably provided in the back (50) of the coupling section (26).

21. Wiper arm according to one of the above claims 14 to 20, **characterised in that** at least one spoiler-like air guide (82) is provided on the coupling section (26) of the wiper arm (14), preferably on the back of the coupling section (26).

22. Wiper arm according to claim 21, **characterised in that** the air guide (82) is formed by a section cut free from the back (50) of the coupling section (26) and bent upwards in the manner of a spoiler.

## Revendications

1. Balai d'essuie-glace à relier de façon détachable avec un bras d'essuie-glace, comprenant une raclette (16) dirigée vers la vitre à essuyer, au moins un élément porteur (18, 20) étiré en longueur en forme de bande, un cavalier (22) relié à l'élément porteur (18, 20), et un élément de liaison (24) positionné de façon pendulaire sur le cavalier (22) pour le raccordement à un tronçon de couplage (26), du bras d'essuie-glace (14), présentant un tronçon d'insertion (28) en forme de languette, **caractérisé en ce que** l'élément de liaison (24) du balai d'essuie-glace (12) présente un logement (30) pour le tronçon d'insertion (28) en forme de languette du tronçon de couplage (26) du bras d'essuie-glace (14) et des tronçons de sécurisation (42) pour la liaison mutuelle durable avec le tronçon de couplage (26) du bras d'essuie-glace (14) par des tronçons de sécurisation (56) prévus sur le tronçon de couplage (26),
le tronçon d'introduction (28) pouvant être introduit en grande partie de façon rectiligne dans le logement (30) afin d'atteindre une position de prémontage dans laquelle l'axe longitudinal du bras d'essuie-glace (14) et l'axe longitudinal de l'élément de liaison (24) forment un angle α de l'ordre de 10 à 100° environ, et
le bras d'essuie-glace (14) et le tronçon de liaison (24) pouvant pivoter l'un vers l'autre autour de la zone de contact tronçon d'introduction/logement jusqu'à ce que les tronçons de sécurisation (40, 42, 56) permettent une liaison durable mutuelle afin d'atteindre une position de montage final.

2. Balai d'essuie-glace selon la revendication 1, **caractérisé en ce que** le sens d'introduction (64) permettant d'atteindre la position de prémontage se trouve sur le plan de pivotement permettant d'atteindre la position de montage final.

3. Balai d'essuie-glace selon la revendication 1 ou la revendication 2, **caractérisé en ce que** la zone (48) prévue pour coopérer avec le tronçon d'introduction (28) du bras d'essuie-glace, adjacente à l'ouverture d'introduction (30), de l'élément de liaison (24), est complémentaire au tronçon d'introduction (28).

4. Balai d'essuie-glace selon l'une quelconque des revendications précédentes, **caractérisé en ce que** la zone (48) de l'élément de liaison (24), prévue pour coopérer avec le tronçon d'introduction (28) du bras d'essuie-glace est en forme d'arc dans le tronçon longitudinal et, en particulier, en forme de segment de cercle.

5. Balai d'essuie-glace selon l'une quelconque des revendications précédentes, **caractérisé en ce que** l'élément de liaison (24) a une section en forme de U et comporte un dos (32) et deux branches (34).

6. Balai d'essuie-glace selon la revendication 5, **caractérisé en ce que** l'ouverture d'introduction (30) est configurée sous forme d'évidement sur le dos (32).

7. Balai d'essuie-glace selon l'une quelconque des revendications précédentes, **caractérisé en ce que** les tronçons de sécurisation sont configurés en forme de tronçons d'enclenchement (40, 42).

8. Balai d'essuie-glace selon l'une quelconque des revendications précédentes, **caractérisé en ce que** l'élément de liaison (24) présente, sur son côté opposé à l'ouverture d'introduction (30) dans le sens longitudinal, sur les branches (34), respectivement une languette d'enclenchement (40) souple dans le sens transversal, s'étendant dans le sens longitudinal, conçue pour coopérer avec des arêtes d'enclenchement (56) prévues sur le tronçon de couplage (26) du bras d'essuie-glace.

9. Balai d'essuie-glace selon la revendication 8, **caractérisé en ce que** les arêtes d'enclenchement (42) des languettes d'enclenchement (40) forment un angle aigu β avec l'axe longitudinal, l'angle β mesurant env. 30 à 80°.

10. Balai d'essuie-glace selon l'une quelconque des revendications 8 ou 9, **caractérisé en ce que** les côtés (60), dirigés vers le dos (50) du tronçon de couplage (26), des languettes d'enclenchement (40) sont biseautés en conséquence pour faciliter l'enclenchement.

11. Balai d'essuie-glace selon l'une quelconque des revendications précédentes, **caractérisé en ce que** le cavalier (22) présente un boulon de palier dont les extrémités dépassent du cavalier (22) ou bien aussi deux pivots (88) sur lesquels l'élément de liaison (24), comportant des alésages de palier (90) correspondants et alignés dans ses branches (34), est positionné de manière à pouvoir pivoter.

12. Balai d'essuie-glace selon la revendication 11, **caractérisé en ce que** les alésages de palier (90), prévus dans les branches (34) de l'élément de liaison (24) sont ouvertes chacune par une fente (92) située radialement à l'alésage de palier.

13. Balai d'essuie-glace selon la revendication 12, **caractérisé en ce que** la fente (92) s'élargit depuis l'alésage de palier (90) vers le bord de la branche (34), l'endroit le plus étroit de la fente (92) étant plus petit que le diamètre du boulon de palier respectivement des pivots (88) pouvant être utilisés à la place.

14. Bras d'essuie-glace comportant un tronçon de couplage (26), avec lequel on peut relier un balai d'essuie-glace (12) de façon détachable, la balai (12) comprenant une raclette (16) dirigée vers la vitre à essuyer, au moins un élément porteur (18, 20) étiré en longueur en forme de bande, un cavalier (22) relié à l'élément porteur (18, 20), et un élément de liaison (24) positionné de façon pendulaire sur le cavalier (22) pour le raccordement au tronçon de couplage (26), du bras d'essuie-glace et l'élément de liaison (24) présentant un logement (30) pour le tronçon d'introduction (28) et les tronçons de sécurisation (42), **caractérisé en ce que** le tronçon de couplage (26) présente un tronçon d'insertion (28) en forme de languette et des tronçons de sécurisation (56) pour la liaison mutuelle durable avec l'élément de liaison (24) du balai d'essuie-glace (12) par les tronçons de sécurisation (42) de l'élément de liaison (24) du balai d'essuie-glace (12),
le tronçon d'introduction (28) pouvant être introduit en grande partie de façon rectiligne (14) dans le logement (30) afin d'atteindre une position de prémontage dans laquelle l'axe longitudinal du bras d'essuie-glace (14) et l'axe longitudinal de l'élément de liaison (24) forment un angle α de l'ordre de 10 à 100° environ, et
le bras d'essuie-glace (14) et le tronçon de liaison (24) pouvant pivoter l'un vers l'autre autour de la zone de contact tronçon d'introduction/logement jusqu'à ce que les tronçons de sécurisation (42, 56) permettent une liaison durable mutuelle, afin d'atteindre une position de montage final.

15. Bras d'essuie-glace selon la revendication 14, **caractérisé en ce que** l'élément de couplage (26) a une section en forme de U et comporte un dos (50) et deux branches (52, 54), le tronçon d'introduction (28) ayant la forme d'un crochet et étant aménagé sur le dos (50) du tronçon de couplage (26).

16. Bras d'essuie-glace selon la revendication 15, **caractérisé en ce que** le tronçon d'introduction (28), sur l'extrémité libre, en direction du prolongement du bras d'essuie-glace (14) et, vu de côté, en direction de la vitre à essuyer, a une forme d'arc telle qu'il ne dépasse pas du dos (50).

17. Bras d'essuie-glace selon l'une quelconque des revendications 14 à 16, **caractérisé en ce que** le tronçon d'introduction (28) est en forme d'arc en coupe longitudinale et, en particulier, en forme de segment de cercle.

18. Bras d'essuie-glace selon l'une quelconque des revendications 14 à 17, **caractérisé en ce que**, sur les branches (52, 54) du tronçon de couplage (26), se trouvent des arêtes d'enclenchement (56) afin de coopérer avec des languettes d'enclenchement (40) présentes sur l'élément de liaison (24), les arêtes d'enclenchement (56) des branches (52, 54) formant, de préférence, avec l'angle longitudinal, un angle aigu mesurant en particulier 30 à 80°.

19. Bras d'essuie-glace selon l'une quelconque des revendications 14 à 18, **caractérisé en ce que** les côtés, dirigés vers la vitre, des branches (52, 54) du tronçon de couplage (26) sont chanfreinés pour faciliter l'enclenchement.

20. Bras d'essuie-glace selon l'une quelconque des revendications 14 à 19, **caractérisé en ce que** le tronçon de couplage (26) du bras d'essuyage (14) présente au moins une ouverture (80) appropriée pour le passage de l'air, prévue de préférence dans le dos (50) du tronçon de couplage (26).

21. Bras d'essuie-glace selon l'une quelconque des revendications 14 à 20, **caractérisé en ce que**, sur le tronçon de couplage (26) du bras d'essuie-glace (14), de préférence sur le dos du tronçon de couplage (26), se trouve au moins un moyen de guidage de l'air (82) en forme de spoiler.

22. Bras d'essuie-glace selon la revendication 21, **caractérisé en ce que** le moyen de guidage de l'air (82) est formé par un tronçon découpé dans le dos (50) du tronçon de couplage (26) et courbé vers le haut à la façon d'un spoiler.
